# EUROPÄISCHE PATENTSCHRIFT

(11) **EP 2 861 451 B1**
(45) Veröffentlichungstag und Bekanntmachung des Hinweises auf die Patenterteilung: **09.12.2015**
(21) Anmeldenummer: 12813785.8
(22) Anmeldetag: 13.12.2012
(51) Int. Cl.: B60L 11/18, G07F 17/00, G07F 15/00, G06Q 20/32

(54) **LADESTATION MIT NAHFELDKOMMUNIKATIONSVERBINDUNG**
CHARGING STATION HAVING NEAR-FIELD COMMUNICATION LINK
POSTE DE CHARGE À LIAISON DE COMMUNICATION EN CHAMP PROCHE

(30) Priorität: 15.06.2012 DE 102012011773
(43) Veröffentlichungstag der Anmeldung: 22.04.2015
(73) Patentinhaber: RWE AG, 45128 Essen (DE)
(72) Erfinder: WAFFNER, Jürgen, 45307 Essen (DE)
(74) Vertreter: Cohausz & Florack
(86) Internationale Anmeldenummer: PCT/EP2012/075325
(87) Internationale Veröffentlichungsnummer: WO 2013/185860

(56) Entgegenhaltungen:
- WO-A1-2011/126600
- WO-A2-2009/098687
- US-A1- 2003 120 442
- US-A1- 2009 177 580
- US-A1- 2011 153 474

## Beschreibung

Der Gegenstand betrifft eine Ladestation für Elektrofahrzeuge sowie ein Applikationsprogramm als auch ein Verfahren zum Betreiben einer Ladestation für Elektrofahrzeuge.

Der Ausbau der Infrastruktur für die Elektromobilität ist von entscheidender Bedeutung für die Akzeptanz und die Marktdurchdringung von Elektrofahrzeugen. Ein wesentlicher Aspekt des Ausbaus der Infrastruktur ist die Bereitstellung von Ladestationen in öffentlichen als auch nicht öffentlichen Bereichen, wie beispielsweise an Straßen, in Parkhäusern und auf Parkplätzen. Eine große Anzahl von Ladestationen ist notwendig, um eine flächendeckende Versorgung von Elektrofahrzeugen mit elektrischer Energie sicherstellen zu können.

Durch die große Anzahl der benötigten Ladestationen ist ein entscheidender Faktor für die Bereitstellung der Ladestationen deren Kosten. Die Kosten werden durch die in der Ladestation verbauten Komponenten bestimmt. Da die durch die Ladestationen zur Verfügung gestellte Energie durch ein Abrechnungssystem abgerechnet werden muss, verfügen viele Selbstbedienungsladestationen über Kommunikationsmittel, über die eine Kommunikation mit Zentralrechnern (Abrechnungszentralen) möglich ist. Über diese Kommunikationseinrichtungen wird die gesamte, die Abrechnung betreffende Kommunikation zwischen Ladestation und Abrechnungszentrale abgewickelt. Somit ist die Kommunikationseinrichtung für solche Ladestationen ein nahezu unverzichtbares Element. WO 2011126600 und US 2009177580 offenbaren Systeme mit einer Ladestation für Elektrofahrzeuge, gemäß dem Stand der Technik, wobei Identifikations-, Lade- und Zahldaten zwischen dem mobilen Kommunikationsgerät und der Ladestation, mittels Nahfeldkommunikation, und zwischen der Ladestation und dem Zentralrechner ausgetauscht werden.

Nachteilig an dem Einbau der Kommunikationseinrichtung zur Kommunikation mit dem Zentralrechner in die Ladestation sind jedoch zum Einen die hohen Kosten und zum Anderen die gegebenenfalls fehlende Zukunftssicherheit. Insbesondere bei der Kommunikation über Mobilfunknetze könnte durch sich verändernde Mobilfunkstandards die Notwendigkeit entstehen, die Kommunikationseinrichtungen in den Ladestationen nachzurüsten. Auch dies führte zu hohen Kosten.

Aus diesem Grunde lag dem Gegenstand die Aufgabe zugrunde, eine Ladestation zur Verfügung zu stellen, welche in besonders einfacher zukunftssicherer Art und Weise eine Kommunikation von abrechnungsrelevanten Daten zwischen der Ladestation und einem Zentralrechner ermöglicht.

Diese Aufgabe wird durch eine Ladestation, ein Applikationsprogramm als auch ein Verfahren nach den unabhängigen Ansprüchen gelöst.

Insbesondere wird die Aufgabe durch eine Ladestation für Elektrofahrzeuge gelöst, die eine einen Energieverbrauch eines daran angeschlossenen Elektrofahrzeugs messende Messeinrichtung (Zähler, Stromzähler) aufweist. Die Ladestation weist auch eine den Messwert der Messeinrichtung in Daten wandelnde Recheneinrichtung und eine die Daten an einen Zentralrechner übermittelnde Kommunikationseinrichtung auf.

Die Kommunikationseinrichtung ist dabei zum Aufbau einer Nahfeldkommunikationsverbindung mit einem mobilen Kommunikationsgerät eingerichtet ist, derart, dass über die Nahfeldkommunikationsverbindung mit dem Kommunikätionsgerät eine zur Übermittlung der Daten geeignete Weitverkehrsverbindung mit dem Zentralrechner etablierbar ist.

Es ist erkannt worden, dass die in der Ladestation verbaute Kommunikationseinrichtung lediglich eine Nahfeldkommunikationsverbindung aufbauen muss. Mittels dieser Nahfeldkommunikationsverbindung ist es möglich, mit mobilen Kommunikationsgeräten, die von den Nutzern der Ladestationen ohnehin bereit gehalten werden, Weitverkehrsverbindungen mit dem Zentralrechner aufzunehmen.

Insbesondere ist es möglich, mittels Near Field Communication (NFC), Bluetooth, ZigBee, Wlan, RFID, WiFi oder dergleichen ein Nahfeld im Bereich der Ladestation durch die Kommunikationseinrichtung aufzubauen. Eine Kommunikationseinrichtung, die zum Aufbau einer Nahfeldkommunikation eingerichtet ist, ist preislich erheblich günstiger, als eine Kommunikationseinrichtung, die zum Aufbau einer Weitverkehrsverbindung eingerichtet ist.

Mit Hilfe der in der Ladestation verbauten Kommunikationseinrichtung zum Aufbau einer Nahfeldkommunikationsverbindung wird die Nahfeldkommunikationsverbindung mit dem mobilen Kommunikationsgerät, welches der Nutzer der Ladestation mit sich führt, aufgebaut.

Dieses mobile Kommunikationsgerät verfügt in der Regel über Mittel, um eine Weitverkehrsverbindung aufzubauen. Dies kann entweder eine Wlan-Verbindung mit einem Internetzugangspunkt oder auch eine Mobilfunkverbindung, insbesondere in einem zellularen Mobilfunknetz, wie beispielsweise GSM, GPRS, UMTS, LTE, EDGE, CDMA, W-CDMA oder dergleichen sein. Die Nutzer der Ladestationen verfügen in der Regel über sogenannten "Flatrate" Datentarife, die eine für den Nutzer kostenneutrale Kommunikation zwischen dem Kommunikationsgerät und einem an das Internet angeschlossenen Zentralrechner ermöglichen.

Die Ladestation baut dann unter Verwendung des von dem Nutzer ohnehin mitgeführten Kommunikationsgeräts eine Verbindung, insbesondere über das Internet, mit dem Zentralrechner, der vorzugsweise eine Abrechnungszentrale oder eine Steuerzentrale für die Ladestation ist, auf. Insbesondere kann die Verbindung eine durch die Nahfeldkommunikationsverbindung und die Weitverkehrsverbindung getunnelte Verbindung zwischen Ladestation und Zentralrechner sein. Bei der Verbindung kann das Kommunikationsgerät eine für die Ladestation und den Zentralrechner transparente Weiterleitungsstation darstellen.

Die in der Ladestation verbaute Kommunikationseinrichtung muss lediglich in der Lage sein, eine Nahfeldkommunikation mit einem mobilen Kommunikationsgerät aufzubauen. Sobald diese Nahfeldkommunikationsverbindung aufgebaut ist, kann die Ladestation die Weitverkehrsverbindung des Kommunikationsgerätes nutzen, um mit dem Zentralrechner insbesondere Messdaten auszutauschen, die zu Abrechnungszwecken genutzt werden können.

Insbesondere ist es zu Beginn eines Ladevorgangs möglich, eine Ladeanforderung des Nutzers in der Ladestation über die Nahfeldkommunikationsverbindung zu empfangen. In dieser Ladeanforderung kann beispielsweise eine Information zu den Nutzerdaten enthalten sein. Hierdurch ist es für den Nutzer möglich, sich gegenüber der Ladestation unter Verwendung der Nahfeldkommunikationsverbindung zu identifizieren.

Bevorzugt ist das Nahfeld in einem Zentimeterbereich um die Ladestation herum aufgebaut. Insbesondere ist die Feldstärke des Nahfeldes so gering, dass nur in einem Abstand von wenigen Zentimetern bis maximal 1 Meter eine Kommunikation zwischen der Kommunikationseinrichtung und dem Kommunikationsgerät möglich ist. Auch ist durch eine Antennenkonfiguration ein gerichtetes Nahfeld etablierbar, derart, dass die Feldstärke in einem Abstrahlkegel mit einem Öffnungswinkel von zwischen 10° und 45°, höchsten aber 90° erhöht ist.

Über das Nahfeld kann ein Austausch von Informationen erfolgen. Dieser Austausch von Informationen ist aufgrund der bei NFC üblicherweise geringen Feldstärke und geringen Übertragungsreichweite relativ sicher gegenüber Angriffen und muss daher nicht zwingend verschlüsselt sein.

Um festzustellen, ob ein Kommunikationsgerät in Reichweite der Ladestation ist, kann die Kommunikationseinrichtung eine Nahfeldverbindungsaufbaunachricht versenden. Dies kann in Abständen, vorzugsweise regelmäßig erfolgen. Beispielsweise ist es möglich, dass in Abständen von 10 Sekunden die Nahfeldverbindungsaufbaunachrichten versendet werden.

Auch ist es möglich, dass eine Nahfeldverbindungsaufbaunachricht, z.B. von einem mobilen Kommunikationsgerät ausgesendete Nahfeldverbindungsaufbaunachricht, in der Kommunikationseinrichtung empfangen wird. Aus diesem Grunde ist es auch möglich, dass die Kommunikationseinrichtung vorzugsweise dauerhaft das Nahfeld überwacht und den Empfang einer Nahfeldverbindungsaufbaunachricht detektieren kann. Sobald eine solche Verbindungsaufbaunachricht empfangen wurde, wird eine Nahfeldkommunikation zwischen der Kommunikationseinrichtung und dem Kommunikationsgerät etabliert.

Dabei kann es vorteilhaft sein, wenn das Kommunikationsgerät bereits Kenntnis von der Möglichkeit der Nahfeldkommunikation mit zumindest einer bestimmten Ladestation / Kommunikationseinrichtung hat. Um dies in dem Kommunikationsgerät überprüfbar zu machen, kann zum Einen die Ladestation bzw. die Kommunikationseinrichtung mit dem Nahfeld eine Kennung aussenden, insbesondere eine Ladestationskennung, eine Zählerkennung und/oder eine Kommunikationseinrichtungskennung. Zum Anderen kann das Kommunikationsgerät von dem Zentralrechner eine Liste mit entsprechenden Kennungen von Ladestationen, Zählern und/oder Kommunikationseinrichtungen empfangen.

Wenn das Kommunikationsgerät dann ein Nahfeld detektiert und in diesem Nahfeld bereits die in dem Kommunikationsgerät bekannte, von dem Zentralrechner zur Verfügung gestellte Kennung gespeichert ist, kann unmittelbar ein Verbindungsaufbau etabliert werden. Dies hat den besonderen Vorteil, dass ohne einen speziellen Paringprozess die Verbindung zwischen der Kommunikationseinrichtung und dem Kommunikationsgerät aufgebaut werden kann. Dies insbesondere da das Kommunikationsgerät Informationen über erlaubte Ladestationen von dem Zentralrechner bereits empfangen und gespeichert hat und somit der Austausch von Kommunikationsgeheimnissen und/oder Zertifikaten zumindest teilweise entfallen kann.

Gemäß einem Ausführungsbeispiel wird vorgeschlagen, dass die Kommunikationseinrichtung zum Empfangen eines Ladefreigabesignals und/oder einer Ladeanforderung über die Nahfeldkommunikationsverbindung eingerichtet ist. Insbesondere ist es möglich, dass das Kommunikationsgerät von dem Nutzer dazu genutzt wird, einen Ladevorgang zu starten. Hierzu kann beispielsweise zu Beginn eines Ladevorgangs der Nutzer mit Hilfe seines Kommunikationsgerätes gegenüber dem Zentralrechner eine Ladefreigabe anfordern. Hierzu übermittelt der Nutzer insbesondere seine Nutzerkennung an den Zentralrechner. In dem Zentralrechner kann die Nutzerkennung überprüft werden. Zusammen mit der Nutzerkennung kann geprüft werden, welche Ladeberechtigungen ein bestimmter Nutzer hat. Diese Information kann von dem Zentralrechner an das Kommunikationsgerät übertragen werden.

Sobald das Kommunikationsgerät die grundsätzliche Ladeberechtigung von dem Zentralrechner empfangen hat, kann es so programmiert sein, dass es eine Ladeanforderung über das Nahfeld an die Ladestation übermittelt. Im Anschluss kann es möglich sein, dass die Ladestation bzw. der Zähler in der Ladestation seinen Zählerstand erfasst und als Daten in eine Antwort auf die Ladeanforderung über das Nahfeld an das Kommunikationsgerät überträgt.

In dem Kommunikationsgerät kann der übermittelte Messwert auf einem Bildschirm angezeigt werden und der Nutzer kann somit den Startzählerstand ablesen.

Der übermittelte Zählerstand kann zusammen mit der von der Ladestation empfangenen Kennung, die ebenfalls über das Nahfeld übertragen werden kann, an den Zentralrechner übertragen werden.

In dem Zentralrechner kann unter Verwendung der Kennung als auch des Messwertes eine Überprüfung dahingehend erfolgen, ob der Messwert plausibel ist. Insbesondere kann überprüft werden, ob der empfangene Messwert von einem für die entsprechende Ladestation mit der entsprechenden Kennung abgespeichertem Messwert übereinstimmt. Insbesondere kann überprüft werden, ob der übertragene Messwert innerhalb einer bestimmten Toleranz von dem zuvor gespeicherten Messwert abweicht. Der zuletzt gespeicherte Messwert ist vorzugsweise der Messwert, der nach der letzten Ladung an dieser Ladestation erfasst und dem Zentralrechner mitgeteilt wurde.

Zu diesem Messwert kann der Eigenverbrauch der Ladestation seit dem Ende der letzten Ladung hinzu addiert werden. Innerhalb dieses Bereichs zwischen dem letzten Messwert und dem letzten Messwert plus maximalem angenommenem Eigenverbrauch sollte der übertragene Messwert liegen, um plausibel zu sein.

Bei einer positiven Plausibilitätsprüfung kann der Zentralrechner über die Weitverkehrsverbindung an das Kommunikationsgerät ein Ladefreigabesignal übertragen. Hierbei kann insbesondere auch eine aktuelle Uhrzeit übertragen werden. Insbesondere ist es möglich, die Informationen mit Hilfe eines privaten Schlüssels des Zentralrechners zu signieren.

Das Kommunikationsgerät kann die Ladefreigabe insbesondere zusammen mit der Signatur über das Nahfeld an die Ladestation übertragen. In der Ladestation kann die Signatur mit Hilfe eines öffentlichen Schlüssels des Zentralrechners überprüft werden und bei einer positiven Überprüfung kann davon ausgegangen werden, dass das Ladefreigabesignal tatsächlich von dem Zentralrechner stammte. In diesem Fall kann ein Ladevorgang gestartet werden, insbesondere kann ein Ladekabel in einem Fahrzeug verriegelt und anschließend ein Ladestrom freigegeben werden.

Wie zuvor bereits erläutert, kann in dem Zentralrechner anhand der Nutzerkennung ermittelt werden, welche Ladeberechtigung ein Nutzer hat. Eine Ladeberechtigung kann Information zu einer Ladedauer, einem Ladezeitraum, einen Ladestartzeitpunkt, einen Ladeendzeitpunkt, einer Ladeleistung und/oder einer Ladeenergie enthalten. Diese Ladeberechtigung kann beispielsweise mit dem Ladefreigabesignal, welches von dem Zentralrechner an das Kommunikationsgerät über die Weitverkehrsverbindung als auch von dem Kommunikationsgerät an die Ladestation über die Nahfunkkommunikationsverbindung übertragen wird enthalten sein. Diese Informationen können in der Ladestation dazu verwendet werden, den Ladevorgang entsprechend zu steuern.

Gemäß einem Ausführungsbeispiel wird vorgeschlagen, dass die Kommunikationseinrichtung zum Aussenden einer Statusnachricht und/oder einer Fehlermeldung über die Nahfeldkommunikationsverbindung an den Zentralrechner eingerichtet ist. Insbesondere kann ein Status über das Messgerät, insbesondere ob das Messgerät funktionstüchtig ist, über die Nahfeldkommunikationsverbindung an den Zentralrechner abgesetzt werden. Andere Fehlermeldungen können ebenfalls zunächst über die Nahfeldkommunikationsverbindung und dann mittelbar mittels des Kommunikationsgeräts über die Weitverkehrsverbindung an den Zentralrechner übertragen werden.

Auch ist es möglich, dass Steuerdaten, Lastprofile und/oder Zeitinformationen über die Nahfeldkommunikationsverbindung von dem Zentralrechner in der Ladestation empfangen werden. Hierzu kann das Kommunikationsgerät zunächst über die Weitverkehrsverbindung die entsprechenden Informationen von dem Zentralrechner empfangen und dann über die Nahfeldkommunikationsverbindung an die Kommunikationseinrichtung der Ladestation übertragen.

Ein weiterer Aspekt ist ein Applikationsprogramm für ein mobiles Kommunikationsgerät mit zumindest einer Weitverkehrskommunikationseinrichtung, einem Prozessor und einer Nahfeldkommunikationseinrichtung. Das Applikationsprogramm kann Befehle zum Steuern des mobilen Kommunikationsgerätes derart umfassen, dass die Weitverkehrskommunikationseinrichtung eine Weitverkehrsverbindung mit einem räumlich entfernt angeordneten Zentralrechner aufbaut, die Nahfeldkommunikationseinrichtung eine Nahfeldkommunikationsverbindung mit einer Ladestation für Elektrofahrzeuge aufbaut und der Prozessor von der Nahfeldkommunikationseinrichtung empfangene, zumindest einen Energieverbrauch repräsentierenden Messwert umfassende Daten der Ladestation zur Übermittlung an den Zentralrechner an die Weitverkehrskommunikationseinrichtung weiterleitet.

Hierdurch ist es möglich, das mobile Kommunikationsgerät zur Kommunikation mit dem Zentralrechner anzusteuern.

Es ist bevorzugt, wenn der Nutzer das Applikationsprogramm auf sein mobiles Kommunikationsgerät geladen hat. Mit Hilfe des Applikationsprogramms kann der Nutzer dann unter Verwendung der Nahfeldkommunikation eine Kommunikation mit der Ladestation aufnehmen und Ladeanforderungen bzw. Ladefreigaben an die Ladestation übertragen.

Um eine Ladefreigabe zu bewirken, kann bevorzugt sein, wenn das Applikationsprogramm zunächst die Weitverkehrskommunikationseinrichtung die Verbindung mit dem Zentralrechner aufbauen lässt. Damit kann sichergestellt werden, dass eine Kommunikationsverbindung mit dem Zentralrechner besteht.

Anschließend oder auch parallel kann auch eine Nutzerkennung an den Zentralrechner übermittelt werden. Mit Hilfe der Nutzerkennung kann der Zentralrechner erfassen, welcher Nutzer einen Ladevorgang starten möchte.

Auch ist es möglich, dass vor dem Laden bzw. vor dem Übermitteln einer Ladefreigabe über die Nahfeldkommunikation der Zahlvorgang über das Applikationsprogramm abgewickelt wird. Hierzu kann das Applikationsprogramm eingerichtet sein, über das Weitverkehrsnetz eine Kommunikation mit einem Bezahldienst aufzubauen um nach einem dort abgewickelten Bezahlvorgang einen Ladefreigabecode-zu empfangen. Auch ist es möglich, eine Kurznachricht an einen Bezahldienst zu senden und in Reaktion auf diese Kurznachricht eine Antwort von dem Bezahldienst zu erhalten, wobei in der Antwort ein Ladefreigabecode enthalten ist. Die Kosten der Kurznachricht können so sein, dass damit zumindest in Teilen die zu beziehende Energiemenge bezahlt wird. Auch ist es möglich, dass eine Bezahlung über einen sogenannten "in-App" Kauf abgewickelt wird, d.h. dass das Applikationsprogramm mit dem Applikationsprogrammanbieter einen Zahlvorgang auslöst und im Anschluss einen Ladefreigabecode erhält. In dem jeweiligen Ladefreigabecode kann eine Information zu der bezahlten Energie, der Ladeleistung oder sonstigen Ladeinformationen enthalten.

Durch die genannten Verfahren kann eine Zahlung unabhängig von einer Vertragsbeziehung zwischen dem Nutzer und dem. Energielieferanten abgewickelt werden. Alle diese Zahlvorgänge als auch die Kommunikation mit dem Zentralrechner können zur Folge haben, dass das mobile Kommunikationsgerät eine Information, insbesondere in Form eines Ladefreigabecodes oder eines Ladefreigabesignals enthält, der von der Nahfeldkommunikationseinrichtung genutzt werden kann, ein Ladefreigabesignal an die Ladestation zu übermitteln.

Gemäß einem vorteilhaften Ausführungsbeispiel wird vorgeschlagen, dass das Applikationsprogramm den Prozessor derart ansteuert, dass dieser eine über die Weitverkehrskommunikationseinrichtung von dem Zentralrechner empfangene Liste mit Kennungen (Ladestationskennung und/oder Messgerätekennung etc.) verarbeitet. Insbesondere ist es möglich, dass bei einem ersten Verbindungsaufbau zwischen Kommunikationsgerät und Zentralrechner eine Liste aller bekannten Ladestationen bzw. Kennungen von dem Zentralrechner an das Kommunikationsgerät übermittelt wird. Zusätzlich dazu kann eine Versionsnummer dieser Liste mit übermittelt werden.

Bei jeder weiteren Kommunikation kann die Versionsnummer der Liste, die auf dem Kommunikationsgerät gespeichert ist, übertragen werden und bei einer Änderung kann lediglich eine Aktualisierung dieser Liste mit einer neuen Versionsnummer erfolgen. Dies verringert die Datenmenge, die zur Übertragung der Kennungen notwendig ist, was dann auch deren Aktualisierung beschleunigt.

Auch ist es möglich, dass das Applikationsprogramm eine einer Nutzerkennung zugeordnete Ladeberechtigung verarbeitet. Hierzu kann das Applikationsprogramm den Prozessor ansteuern, die Ladeberechtigung zu überprüfen und abhängig von der Ladeberechtigung eine Ladeanforderung und/oder ein Ladefreigabesignal über die Nahfunkkommunikationsverbindung an die Ladestation zu übertragen.

Auch wird vorgeschlagen, dass die Nahfeldkommunikationseinrichtung bei einem detektierten, von einer Ladestation ausgestrahlten Nahfeld eine Kennung aus diesem Nahfeld extrahiert. Diese aus dem Nahfeld extrahierte Kennung kann durch den Prozessor mit von dem Zentralrechner empfangenen und gespeicherten Kennungen verglichen werden.

Bei einem positiven Vergleichsergebnis kann unmittelbar eine Mitteilung an den Nutzer über den Bildschirm des Kommunikationsgerätes erfolgen. Außerdem kann unmittelbar eine Kopplung mit der Ladestation erfolgen. Parallel dazu oder danach kann eine Ladeanforderung von der Nahfeldkommunikationseinrichtung über das Nahfeld an die Ladestation übermittelt werden. Dies beschleunigt den Aufbau einer Nahfeldkommunikationsverbindung enorm, da die Kennung(en) der jeweiligen Ladestation bereits vor Beginn des Nahfeldverbindungsaufbaus im Kommunikationsgerät bekannt sind. Unmittelbar nach einer positiven Überprüfung kann ein Verbindungsaufbau erfolgen.

Auch wird vorgeschlagen, dass die Nahfeldkommunikationseinrichtung überwacht, ob die Ladestation über das Nahfeld eine Bestätigungsnachricht zu der Ladeanforderung aussendet. Gegebenenfalls können aus der Bestätigungsnachricht Daten extrahiert werden. Diese Daten können beispielsweise eine Information über einen Messwert des Messgerätes der Ladestation enthalten. Außerdem kann eine Kennung enthalten sein. Auch können Statusmeldungen der Ladestation enthalten sein. Die Daten können signiert sein, Die extrahierten Daten können zumindest teilweise über die Weitverkehrskommunikationseinrichtung an den Zentralrechner übermittelt werden.

Zu Beginn einer Ladung muss der Nutzer Kenntnis über den Zählerstand des Energiezählers in der Ladestation haben. Dies kann dadurch geschehen, dass in der Bestätigungsnachricht in Reaktion auf die Ladeanforderung von der Ladestation an das Kommunikationsgerät über das Nahfeld der Messwert des Energiezählers übertragen wird. Dieser Messwert kann an dem Kommunikationsgerät angezeigt werden.

In dem Zentralrechner kann dann der durch den Messwert repräsentierte Zählerstand überprüft werden. Es kann geprüft werden, ob dieser Zählerstand in etwa mit dem zuletzt für diese Ladestation gespeicherten Zählerstand übereinstimmt. Hierdurch können Manipulationen am Zählerstand bzw. am Messwert erschwert werden.

Gemäß einem Ausführungsbeispiel wird vorgeschlagen, dass der Prozessor Daten umfassend zumindest den empfangenen Messwert, die extrahierten Kennung(en) und/oder die Nutzerkennung zur Übermittlung an den Zentralrechner an die Weitverkehrskommunikationseinrichtung übergibt.

Ein Ladefreigabesignal kann durch das Kommunikationsgerät von dem Zentralrechner empfangen werden. Dieses Ladefreigabesignal kann beispielsweise eine Signatur des Zentralrechners enthalten, so dass sichergestellt ist, dass das Kommunikationsgerät eine Ladefreigabe über das Nahfeld an die Ladestation nur dann übermitteln kann, wenn der Zentralrechner diesem zugestimmt hat, also das Ladefreigabesignal signiert hat. Das Ladefreigabesignal kann über die Weitverkehrskommunikationseinrichtung von dem Zentralrechner empfangen werden und über die Nahfeldkommunikationseinrichtung an die Ladestation übermittelt werden. In der Ladestation kann die Signatur des Zentralrechners auf Korrektzeit überprüft werden und gegebenenfalls ein Ladevorgang gestartet werden. Somit ist sichergestellt, dass nur ein berechtigter Zentralrechner einen Ladevorgang freigeben kann.

Ein weiterer Aspekt ist ein Verfahren zum Betreiben einer Ladestation für Elektrofahrzeuge umfassend Aussenden von Daten umfassend zumindest einen Messwert einer einen Energieverbrauch messenden Messeinrichtung über ein Nahfeld, Empfangen von Daten im Nahfeld durch ein mobiles Kommunikationsgerät und Übermitteln der Daten von dem mobilen Kommunikationsgerät an einen Zentralrechner über ein Weitverkehrsnetz.

Bei dem geschilderten Verfahren nutzt die Ladestation die durch das Kommunikationsgerät im Bereich der Ladestation bereits zur Verfügung gestellte Weitverkehrsverbindung mit dem Zentralrechner. Dadurch kann die Verbindung zwischen Ladestation und Zentralrechner besonders kostengünstig hergestellt werden. Insbesondere hat das Kommunikationsgerät bereits vor der Kontaktaufnahme mit der Ladestation, insbesondere vor dem Aussenden der Ladeanforderung, einen Kommunikationskanal mit dem Zentralrechner über ein Weitverkehrsnetz, insbesondere das Internet, aufgebaut. Somit kann ein Kommunikationskanal zwischen der Ladestation und dem Zentralrechner unmittelbar aufgebaut werden, in dem die Ladestation sowohl das Nahfeld als auch das Weitverkehrsnetz nutzt.

Gemäß einem Ausführungsbeispiel wird vorgeschlagen, dass zu Beginn eines Ladevorgangs eine Ladeanforderung von dem Kommunikationsgerät über das Nahfeld an die Ladestation übermittelt wird. In der Ladeanforderung kann der Ladestation die Bereitschaft zum Start eines Ladevorgangs mitgeteilt werden, woraufhin die Ladestation über das Nahfeld an das Kommunikationsgerät in einer Bestätigungsnachricht zumindest einen Messwert repräsentierende Daten übermittelt. Somit kann sichergestellt werden, dass der aktuelle Zählerstand bzw. Messwert sowohl dem Nutzer zur Verfügung gestellt werden kann, als auch dem Zentralrechner für eine Plausibilitätsprüfung.

Gemäß einem Ausführungsbeispiel wird vorgeschlagen, dass die zu Beginn des Ladevorgangs übermittelten Daten zumindest teilweise zunächst über das Weitverkehrsnetz von dem Kommunikationsgerät an ein Zentralrechner übermittelt werden, dass die übermittelnden Daten in dem Zentralrechner auf Plausibilität überprüft werden und dass bei einer positiven Prüfung zumindest ein Ladefreigabesignal und/oder ein Zeitsignal über das Weitverkehrsnetz von dem Zentralrechner an das Kommunikationsgerät übertragen werden. Dies stellt sicher, dass die zu Beginn des Ladevorgangs, insbesondere in Reaktion auf eine Ladeanforderung in dem Kommunikationsgerät empfangenen Daten, in dem Zentralrechner auf Plausibilität überprüft werden können. Nur bei einer Plausibilität dieser Daten kann der Zentralrechner ein Ladefreigabesignal erstellen, welches zur Ladefreigabe an der Ladestation führt.

Gemäß einem Ausführungsbeispiel wird vorgeschlagen, dass zum Ende eines Ladevorgangs von dem Kommunikationsgerät über das Nahfeld an die Ladestation ein Ladeendsignal übermittelt wird. Auch ist es möglich, dass die Ladestation zum Ende eines Ladevorgangs über das Nahfeld an das Kommunikationsgerät zumindest einen Messwert repräsentierende Daten überträgt. Außerdem kann eine Kennung, z.B. eine Messgerätekennung übertragen werden. Die Messgerätekennung als auch die den Messwert repräsentierenden Daten können zunächst an den Zentralrechner über das Weitverkehrsnetz übermittelt werden. Wenn der Zentralrechner den Empfang quittiert, kann das Ladeendsignal an die Ladestation übertragen werden. Dies kann z.B. durch ein signiertes Quittungssignal an das Kommunikationsgerät erfolgen. Dies stellt sicher, dass erst nachdem die abrechnungsrelevanten Daten, insbesondere die Kennung(en), die den Messwert repräsentierenden Daten als auch Nutzerdaten in dem Zentralrechner bekannt sind, der Ladevorgang beendet wird.

Die zuvor genannten Verfahren können auch als Computerprogramm oder als auf einem Speichermedium gespeichertes Computerprogramm realisiert werden. Hierbei kann ladestationsseitig und/oder zentralrechnerseitig und/oder kommunikationgsgerätseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein

Nachfolgend wird der Gegenstand anhand einer ein Ausführungsbeispiel zeigenden Zeichnung erläutert.
- Fig. 1: den Aufbau eines gegenständlichen Systems;
- Fig. 2: den Aufbau eines gegenständlichen mobilen Kommunikationsgerätes;
- Fig. 3: den Ablauf einer Ladefreigabe gemäß einem Ausführungsbeispiel;
- Fig. 4: den Ablauf einer Ladebeendigung gemäß einem Ausführungsbeispiel.

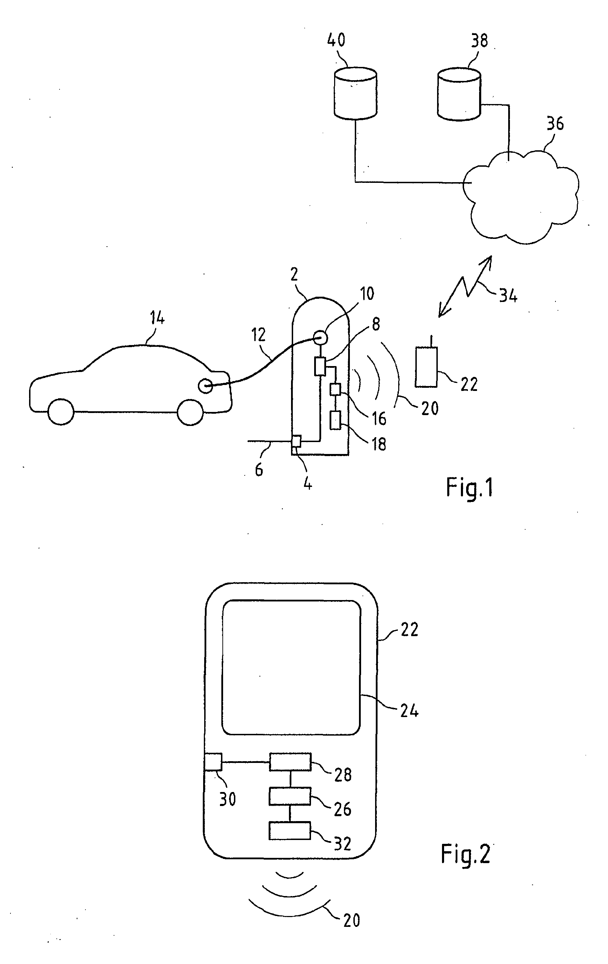

Fig. 1 zeigt eine Ladestation 2 mit einem Anschluss 4 an ein Energieversorgungsnetz 6. In der Ladestation 2 befindet sich ein Stromzähler 8, der über den Anschluss 4 mit dem Energieversorgungsnetz 6 verbunden ist. Auf der anderen Seite ist der Stromzähler 8 mit einer Ladebuchse 10 verbunden. An die Ladebuchse 10 kann über ein Ladekabel 12 ein Elektrofahrzeug 14 mit der Ladestation 2 verbunden werden.

Zur Steuerung des Ladens des Elektrofahrzeugs 14 befindet sich in der Ladestation 2 darüber hinaus eine Ladesteuerschaltung 16 sowie eine Nahfunkkommunikationseinrichtung 18.

Die Nahfunkkommunikationseinrichtung 18 ist eingerichtet zur Kommunikation über ein Nahfeld 20 mit einem mobilen Kommunikationsgerät 22.

Das Nahfeld 20 kann ein Nahfeld 20 nach dem NFC-Standard, dem Bluetooth-Standard, dem ZigBee Standard, dem RFID-Standard oder einem sonstigen Funkstandard für die Nahfunkkommunikation vorzugsweise im Zentimeterbereich sein.

Das mobile Kommunikationsgerät 22 ist in Fig. 2 dargestellt. In der Fig. 2 ist ein schematischer Aufbau eines mobilen Kommunikationsgerätes 22 dargestellt. Das mobile Kommunikationsgerät 22 verfügt über einen Bildschirm 24 sowie optional über eine nicht dargestellte Tastatur. In dem mobilen Kommunikationsgerät 22 befindet sich ein Prozessor 26 sowie eine Kommunikationseinrichtung 28 zur Kommunikation über ein Weitverkehrsnetz mit der Antenne 30.

Auf der anderen Seite ist der Prozessor 26 mit einer Nahfeldkommunikationseinrichtung 32 verbunden, die eine Kommunikation über das Nahfeld 20 etablieren kann.

Zurück in Fig. 1 ist eine Mobilfunkverbindung 34 zwischen dem mobilen Kommunikationsgerät 22 und einem Weitverkehrsnetz 36, insbesondere dem Internet dargestellt.

Die Mobilfunkverbindung 34 kann nach einem Mobilfunkstandard, insbesondere GSM, GPRS, Edge, LTE, CDMA, W-CDMA, CDMA-2000 gebildet sein. Andererseits ist es auch möglich, dass anstelle der Mobilfunkverbindung 34 eine Funknetzverbindung etabliert ist, insbesondere eine Wlan-Verbindung zwischen dem mobilen Kommunikationsgerät 22 und dem Weitverkehrsnetz 36.

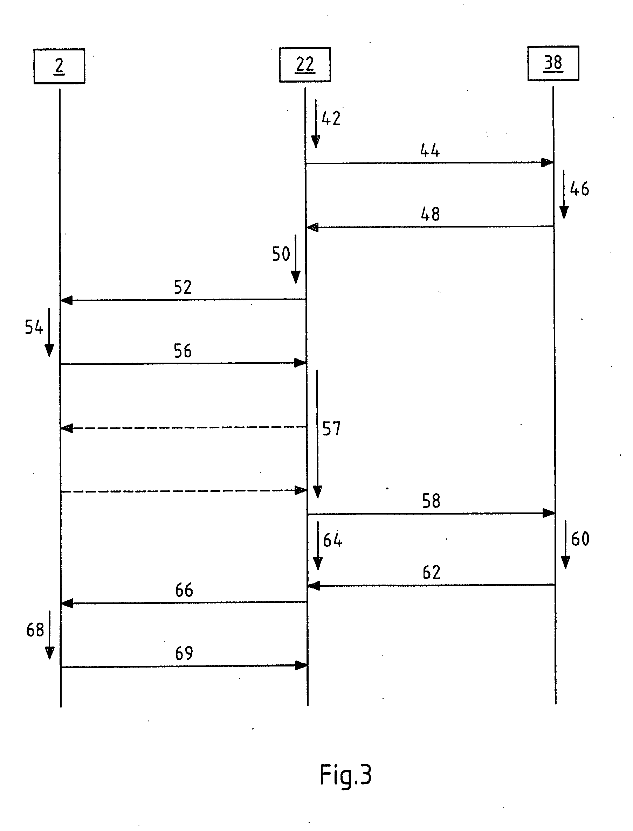

An das Weitverkehrsnetz 36 angeschlossen ist eine Abrechnungszentrale 38, sowie ein Bezahldienstserver 40. Der Ablauf einer Ladefreigabe der Ladestation 2 ist in der Fig. 3 dargestellt.

Fig. 3 zeigt die Kommunikation zwischen der Ladestation 2, dem mobilen Kommunikationsgerät 22 und der Abrechnungszentrale 38. Die gesamte Kommunikation, die über das mobile Kommunikationsgerät 22 abgewickelt wird, kann in einem internen Speicher in dem mobilen Kommunikationsgerät 22 protokolliert werden, so dass nachträglich nachvollzogen werden kann, wo, wann, an welcher Ladestation, welche Energiemenge zu welchem Preis geladen wurde.

In dem Prozessor 26 des mobilen Kommunikationsgeräts 22 ist ein Applikationsprogramm geladen, welches zur Ausführung der Schritte, die nachfolgend beschrieben sind, in dem mobilen Kommunikationsgerät 22 programmiert ist. Das Applikationsprogramm kann von einem Applikationsdienst (nicht dargestellt) geladen werden.

Sobald der Nutzer das Applikationsprogramm auf dem Prozessor 26 startet (42) versucht das Applikationsprogramm über die Kommunikationseinrichtung 28 eine Verbindung über das Internet 36 mit der Abrechnungszentrale 38 aufzubauen. Gelingt dies, d.h. kann ein Kommunikationssignal über die Mobilfunkverbindung 34 und das.Internet 36 zwischen dem mobilen Kommunikationsgerät 22 und der Abrechnungszentrale 38 aufgebaut werden, übermittelt (44) das Applikationsprogramm an die Abrechnungszentrale 38 zumindest eine Nutzerkennung.

Auch ist es möglich, dass der aktuelle Ort, beispielsweise in GPS-Koordinaten übermittelt (44) wird. Darüber hinaus kann beispielsweise übermittelt (44) werden, ob in dem Speicher des mobilen Kommunikationsgeräts 22 bereits eine Liste mit Kennungen von Ladestationen 2 gespeichert ist oder nicht. Gegebenenfalls kann eine Versionsnummer der Liste übertragen (44) werden.

In der Abrechnungszentrale 38 werden die Informationen des mobilen Kommunikationsgeräts 22 empfangen und verarbeitet (46).

Während der Verarbeitung (46) kann in der Abrechnungszentraler 38 zunächst die Nutzerkennung überprüft werden. Hierbei kann die Nutzerkennung mit in der Abrechnungszentrale gespeicherten Nutzerkennungen verglichen werden und falls eine entsprechende Nutzerkennung gefunden wird, kann eine Ladeberechtigung zu dieser Nutzerkennung ermittelt werden. In der Ladeberechtigung kann beispielsweise eine Ladeleistung, eine einem Nutzer noch zur Verfügung stehende Ladeenergie, beispielsweise eine vorausbezahlte Ladeenergie, eine bevorzugte Ladezeit, eine Ladesperrzeit und/oder dergleichen ermittelt werden.

Darüber hinaus kann, beispielsweise wenn eine Versionsnummer einer gespeicherten Liste mit Ladestationskennungen empfangen wurde, ermittelt werden, ob eine neuere Version vorhanden ist. Gegebenenfalls kann ermittelt werden, welche Kennungen sich geändert haben bzw. welche Kennungen neu hinzugekommen sind.

Darüber hinaus kann aus den Ortsdaten ermittelt werden, an welchem Ort sich der Benutzer befindet. Abhängig von dem Ortsteil kann ermittelt werden, welche Ladestationen in der Nähe dieses Ortes sind und die entsprechenden Kennungen können geladen werden.

Die oben genannten ermittelten Daten werden in einem Datenpaket gesammelt und über das Internet 36 und die Mobilfunkverbindung 34 an das mobile Kommunikationsgerät 22 übermittelt (48).

Wenn zuvor als auch nachfolgend die Rede von Ladestationskennung ist, ist dies stets als eine mögliche Kennung zu verstehen. Andere Kennungen können unter Anderem eine Messgerätekennung des Stromzählers 8 oder auch eine Kommunikationseinrichtungskennung der Nahfeldkommunikationseinrichtung 18 sein. Andere Kennungen, die die Ladestation 2 eindeutig kennzeichnen, sind ebenfalls möglich.

In dem mobilen Kommunikationsgerät 22 wird das Datenpaket der Abrechnungszentrale 38 empfangen und verarbeitet (50). Dabei werden die empfangenen Daten insbesondere abgespeichert, insbesondere wird die Ladeberechtigung des Nutzers als auch die übertragenen Kennungen abgespeichert.

Die Schritte 42 - 50 können immer unmittelbar nach dem Start der Applikationsprogramms durchlaufen werden. Dies kann unabhängig davon sein, ob ein Nutzer tatsächlich mit dem Start des Programms einen Ladevorgang beginnen möchte oder nicht. Dies hat den Vorteil, dass, wenn der Ladevorgang beginnen soll, bereits die notwendigen Daten mit dem Zentralrechner 38 ausgetauscht wurden. Die Schritte 44 - 50 können in Abständen wiederholt werden, so dass stets aktuelle Daten vorliegen und stets sichergestellt ist.

Nähert sich ein Nutzer der Ladestation 2 erkennt die Nahfeldkommunikationseinrichtung 32 das Nahfeld 20. In dem Nahfeld 20 kann eine Ladestationskennung enthalten sein, die unmittelbar aus dem Nahfeld 20 durch das mobile Kommunikationsgerät 22 bzw. die Nahfeldkommunikationseinrichtung 32 ermittelt wird. Die Ladestationskennung wird mit den geladenen Ladestationskennungen verglichen und ist die entsprechende Ladestationskennung in dem mobilen Kömmunikationsgerät 22 bekannt, wird unmittelbar eine Ladeanforderung über das Nahfeld 20 von dem mobilen Kommunikationsgerät 22 an die Ladestation 2 übermittelt (52).

In der Ladeanforderung kann beispielsweise die Nutzerkennung enthalten sein. Diese kann jedoch auch später, was in der Fig. 3 mit gestrichelten Linien dargestellt ist, von dem mobilen Kommunikationsgerät 22 an die Ladestation 2 übertragen werden.

Die Ladestation 2 empfängt die Ladeanforderung in der Nahfunkkommunikationseinrichtung 18 und überprüft (54) über die Ladesteuerschaltung 16 die grundsätzliche Ladebereitschaft der Ladestation. Außerdem kann eine Information über den Zählerstand des Stromzählers 8 abgefragt werden. Zumindest eine Information über den Zählerstand des Zählers 8 kann in einer Bestätigungsnachricht von der Ladestation 2 über das Nahfeld 20 an die mobile Kommunikationseinrichtung 22 übermittelt (56) werden.

Daneben können weitere Informationen, wie beispielsweise Fehlermeldungen, Statusmeldungen, Ladestationskennung oder dergleichen in der Bestätigungsnachricht übertragen (56) werden. Diese Informationen werden in dem Prozessor 26 des mobilen Kommunikationsgeräts 22 verarbeitet (57).

Nachdem in dem Prozessor 26 festgestellt wurde, dass die grundsätzliche Ladebereitschaft der Ladestation 2 besteht, wird ein Datensatz umfassend zumindest die Nutzerkennung, die Ladestationskennung und der empfangene Zählerstand über die Mobilfunkverbindung 34 und das Internet 36 an die Abrechnungszentrale 38 übertragen (58).

In der Abrechnungszentrale wird überprüft (60), ob der empfangene Zählerstand mit einem für die entsprechende Ladestation 2 gespeicherten Zählerstand im Wesentlichen übereinstimmt. Weitere Plausibilitätsprüfungen (60) können durchgeführt werden. Bei einer positiven Überprüfung wird ein Ladefreigabesignal an das mobile Kommunikationsgerät 22 übertragen (62).

In dem Ladefreigabesignal kann ein Ladefreigabecode, die aktuell in der Abrechnungszentrale 38 gespeicherte Uhrzeit, die Nutzerkennung, der Zählerstand, die Ladestationskennung und dergleichen in einem Datensatz enthalten sein. Über den Datensatz oder Teile davon kann mit einem geheimen Abrechnungszentralschlüssel eine Signatur erstellt werden, die zusammen mit dem Datensatz übertragen wird. Der Datensatz wird in dem mobilen Kommunikationsgerät 22 über die Kommunikationseinrichtung 28 empfangen und in dem Prozessor 26 verarbeitet.

Parallel zu der Plausibilitätsprüfung (60) kann in dem mobilen Kommunikationsgerät 22 auf dem Bildschirm 24 der empfangene Zählerstand angezeigt werden (64).

Zumindest die empfangene Signatur und/oder die empfangene Uhrzeit kann über den Prozessor 26 an die Nahfeldkommunikationseinrichtung 32 übergeben werden und über das Nahfeld 20 an die Ladestation 2 übertragen werden (66).

In der Ladestation 2 kann diese Information in der Nahfeldkommunikationseinrichtung 18 empfangen werden und durch die Ladesteuerschaltung 16 verarbeitet (68) werden.

Hierbei ist es möglich, dass insbesondere die Signatur überprüft wird. Dies ist dann möglich, wenn in der Ladestation 2 der öffentliche Schlüssel der Abrechnungszentrale abgelegt ist und die Daten, über die die Signatur in der Abrechnungszentrale 38 erstellt wurden, über das Nahfeld 20 an die Ladestation 2 übermittelt wurden. Bei einer positiven Überprüfung der Signatur wird die Uhrzeit in der Ladesteuerschaltung 16 gespeichert und ein Startzählerstand zusammen mit der Uhrzeit abgespeichert.

Anschließend kann die Ladesteuerschaltung 16 den Ladestrom freigeben und das Elektrofahrzeug 14 kann den Ladestrom beziehen. Außerdem wird eine Bestätigungsnachricht an die mobile Kommunikationseinrichtung 22 übermittelt (69). Hierbei kann beispielsweise erneut der Zählerstand zusammen mit der Uhrzeit übertragen (69) werden. Diese Informationen werden auf dem Bildschirm 24 des mobilen Kommunikationsgeräts 22 angezeigt. Außerdem können diese Informationen (nicht dargestellt) zurück an die Abrechnungszentrale 38 übertragen werden. Hierzu kann die Weitverkehrsverbindung 34 genutzt werden.

Für den Fall, dass ein Nutzer kein Nutzerkonto bei der Abrechnungszentrale 38 hat, kann ein Bezahldienstserver 40 verwendet werden. Hierzu kann beispielsweise ein Zahlvorgang mit dem Bezahldienstserver 40 abgewickelt werden. Dies ist beispielsweise über eine Kurznachricht möglich. Auch kann Zahlung an dem Bezahldienstserver 40 über das mobile Kommunikationsgerät 22, z.B. über eine Zahlapplikation oder eine Webseite abgewickelt werden. Andere Zahlverfahren sind ebenfalls möglich. Nachdem ein Zahlvorgang abgewickelt worden ist, der eine Zahlung einer bestimmten Energiemenge beinhaltete, kann von dem Bezahldienstserver 40 eine Mitteilung (z.B. Bezahlcode) entweder unmittelbar an das mobile Kommunikationsgerät 22 über die Weitverkehrsverbindung 34 erfolgen oder zunächst von dem Bezahldienstserver 40 an die Abrechnungszentrale 38. Sobald die Abrechnungszentrale 38 eine entsprechende Mitteilung (Bezahlcode) erhalten hat, kann die Kommunikation entsprechend der Schritte 48 bis 69 fortgeführt werden.

Im Unterschied zu dem zuvor beschriebenen Ablauf kann dabei aber auf die Verwendung der Nutzerkennung verzichtet werden. Dies ermöglicht ein anonymes Zahlen von zu beziehender Energie. Auch ist es möglich, dass ein Bezahlcode unmittelbar von dem Bezahldienstserver 40 über das Weitverkehrsnetz 34 an das mobile Kommunikationsgerät 22 übertragen wird. In einem solchen Fall muss in der Ladestation 2 ein Mechanismus vorhanden sein, der eine Korrektheit eines Bezahlcodes überprüfen kann und diesem Bezahlcode eine Energiemenge zuordnen kann. In diesem Fall kann die Ladesteuerschaltung 16 ebenfalls ein Laden des Elektrofahrzeugs 14 mit der bezahlten Energiemenge steuern, in dem der Bezahlcode über das Nahfeld 20 von dem Kommunikationsgerät 22 an die Ladestation 2 übermittelt wird.

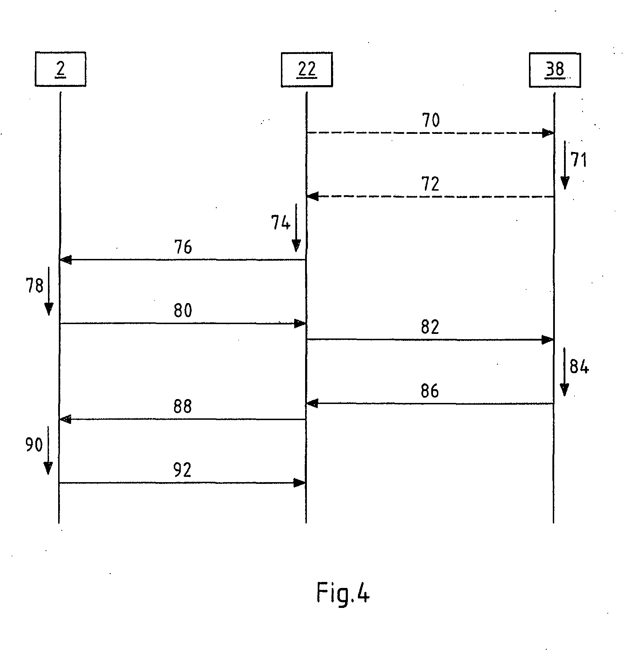

Zum Ende eines Ladevorgangs ist es notwendig, dass dieser ordnungsgemäß unterbrochen wird. Dies ist in der Fig. 4 dargestellt.

Zunächst kann von dem mobilen Kommunikationsgerät 22 über die Weitverkehrsverbindung 34 und 36 eine Nachricht über die Beendigung des Ladevorgangs übertragen (70) werden. In dieser Nachricht kann unter Anderem die Nutzerkennung als auch die Ladestationskennung enthalten sein.

Im Anschluss daran kann in der Abrechnungszentrale 38 überprüft (71) werden, ob eine Nutzerkennung dieses Nutzer vorhanden ist und ggf. ob für diesen Nutzer an der angegebenen Ladestation ein Ladevorgang noch andauert. Gegebenenfalls kann eine Bestätigungsnachricht von der Abrechnungszentrale an das mobile Kommunikationsgerät übertragen (72) werden. Diese Bestätigungsnachricht kann insbesondere die aktuelle Uhrzeit enthalten. Auch kann eine Signatur enthalten sein. In der Bestätigungsnachricht bestätigt somit die Abrechnungszentrale 38 gegenüber dem mobilen Kommunikationsgerät 22 die Möglichkeit, dass ein Ladevorgang beendet werden kann.

Auch ist es möglich, dass in der Nachricht (70) lediglich die Nutzerkennung übertragen wird. In der Abrechnungszentrale 38 wird dann überprüft, welche Ladestationen derzeit über diese Nutzerkennung einen Ladevorgang durchführen und in der Nachricht (72) können alle Ladestationen aufgelistet sein, die zu dieser Nutzerkennung derzeit einen Ladevorgang durchführen. Im Anschluss kann der Nutzer auf dem mobilen Kommunikationsgerät 22 auswählen (74), welchen Ladevorgang an welche Ladestation 2 er beenden möchte.

Anschließend überträgt (76) das mobile Kommunikationsgerät 22 entsprechend einer Nutzerauswahl über das Nahfeld 20 eine Ladeendnachricht an die Ladestation 2. In der Ladeendnachricht kann insbesondere die Uhrzeit und die Signatur über die Uhrzeit enthalten sein. Andere Informationen sind ebenfalls möglich.

Die Ladestation 2 empfängt die Ladeendnachricht (76) und erfasst den aktuellen Zählerstand über die Ladesteuerschaltung 16 und den Stromzähler 8. Die Ladesteuerschaltung 16 bewirkt, dass der Ladestrom unterbrochen wird (78). Anschließend werden der aktuelle Zählerstand, wie Ladestationskennung und Zählerkennung, die empfangene Uhrzeit aus der Nachricht (76) und weitere optionale Informationen über das Nahfeld 20 von der Ladestation 2 an das mobile Kommunikationsgerät 22 übertragen (80).

In dem mobilen Kommunikationsgerät 22 wird diese Nachricht mit der Nahfeldkommunikationseinrichtung 32 empfangen und in dem Prozessor 26 verarbeitet. Insbesondere wird dem Nutzer über den Bildschirm 24 der Zählerstand und optional auch eine verbrauchte Energiemenge sowie eine Uhrzeit und eine Ladestationskennung angezeigt. Darüber hinaus wird der in der Nachricht (80) empfangene Zählerstand über die Kommunikationseinrichtung 28 an die Abrechnungszentrale 38 übertragen (82). Zusammen mit dieser Information kann die Nutzerkennung, die Zählerkennung, die empfangene Uhrzeit oder weitere Informationen übertragen werden.

In der Abrechnungszentrale 38 wird eine Plausibilitätsprüfung (84) der empfangenen Daten durchgeführt und bei einer Plausibilität, insbesondere eine Plausibilität des Zählerstands, wird eine Bestätigungsnachricht von der Abrechnungszentrale 38 an das mobile Kommunikationsgerät 22 übertragen (86).

Bei der Plausibilitätsprüfung (84) wird insbesondere überprüft, ob der empfangene Zählerstand eine Energiemenge widerspiegelt, die möglich ist. Da zu dem jeweiligen Ladevorgang ein Startzählerstand empfangen wurde, wie im Zusammenhang mit Fig. 3 beschrieben und nun zum Ende eines Ladevorgangs ein Endzählerstand empfangen wird, kann eine Differenz der Zählerstände ermittelt werden und überprüft werden, ob diese einen gültigen Ladevorgang repräsentieren.

Die Bestätigungsnachricht (86) kann eine Signatur enthalten, um sicherzustellen, dass eine solche Bestätigungsnachricht lediglich von der Abrechnungszentrale 38 abgesetzt werden kann.

In dem mobilen Kommunikationsgerät 22 wird die von der Kommunikationseinrichtung 28 empfangene Bestätigungsnachricht samt Signatur in dem Prozessor 26 verarbeitet und über die Nahfeldkommunikationseinrichtung 32 über das Nahfeld 20 an die Ladestation 2 weitergeleitet (88).

In der Ladestation 2 wird die Signatur überprüft und bei einer positiven Überprüfung wird das Ladekabel 12 von dem Fahrzeug 14 und der Ladebuchse 10 entriegelt (90). Nach einer erfolgten Entriegelung kann eine Bestätigungsnachricht (92) über das Nahfeld 20 von der Ladestation 2 an das mobile Kommunikationsgerät 22 übertragen werden und auf dem Bildschirm 24 angezeigt werden. Der Ladevorgang ist nunmehr abgeschlossen.

Mit Hilfe der gezeigten Vorrichtungen, des gezeigten Systems und des gezeigten Verfahrens ist es möglich, eine Ladestation 2 zur Verwendung eines Nahfelds 20 mit einer Abrechnungszentrale 38 kommunizieren zu lassen. Hierdurch können erhebliche Kosten für die Ladestation 2 eingespart werden, da diese keine Kommunikationseinrichtung für eine Kommunikation über ein Weitverkehrsnetz benötigt.

## Patentansprüche

1. System mit
- einer Ladestation (2) für Elektrofahrzeuge mit,
- einer einen Energieverbrauch eines angeschlossenen Elektrofahrzeugs messenden Messeinrichtung (8),
- einer einen Messwert der Messeinrichtung (8) in Daten wandelnden Recheneinrichtung (16), und
- einer zumindest die Daten an einen Zentralrechner (38) übermittelnden Kommunikationseinrichtung (18), und mit
- einem mobilen Kommunikationsgerät (22), wobei
- dass die Kommunikationseinrichtung (18) zum Aufbau einer Nahfeldkommunikationsverbindung (20) mit dem mobilen Kommunikationsgerät (22) eingerichtet ist, derart,
- dass über die Nahfeldkommunikationsverbindung (20) mit dem Kommunikationsgerät (22) eine zur Übermittlung der Daten geeignete Weitverkehrsverbindung mit dem Zentralrechner (38) etablierbar ist,
**dadurch gekennzeichnet,**
- **dass** das mobile Kommunikationsgerät (22) von einem Zentralrechner (38) eine Liste mit Kennungen von Ladestationen (2) empfängt und speichert, und
- zum Aufbau der Nahfeldkommunikationsverbindung (20) die Ladestation (2) eine Kennung in einem Nahfeld aussendet und
- **dass** das mobile Kommunikationsgerät (22) die Kennung aus dem Nahfeld extrahiert und durch einen Prozessor mit den vom Zentralrechner (38) empfangenen und gespeicherten Kennungen vergleicht, so dass bei einem positiven Vergleichsergebnis unmittelbar eine Kopplung mit der Ladestation (2) erfolgt.

2. System nach Anspruch 1, **dadurch gekennzeichnet, dass** die Kommunikationseinrichtung (18) zum Empfangen von Nutzerdaten über die Nahfeldkommunikationsverbindung (20) eingerichtet ist.

3. System nach einem der vorangehenden Ansprüche, **dadurch gekennzeichnet, dass** die Kommunikationseinrichtung (18) ein Nahfeld im Zentimeterbereich aufbaut und/oder dass die Kommunikationseinrichtung (18) eine Nahfeldverbindungsaufbaunachricht versendet und/oder den Empfang einer Nahfeldverbindungsaufbaunachricht überwacht und/oder dass die Kommunikationseinrichtung (18) zum Empfangen eines Ladefreigabesignals über die Nahfeldkommunikationsverbindung (20) eingerichtet ist und dass die Kommunikationseinrichtung (18) das Ladefreigabesignal an eine Ladesteuerschaltung in der Ladestation (2) übermittelt.

4. System nach einem der vorangehenden Ansprüche, **dadurch gekennzeichnet, dass** das Ladefreigabesignal Informationen über einen Ladedauer, einen Ladezeitraum, einen Ladestartzeitpunkt, einen Ladeendzeitpunkt und/oder eine Ladeenergie enthält.

5. System nach einem der vorangehenden Ansprüche, **dadurch gekennzeichnet, dass** die Kommunikationseinrichtung (18) zum Aussenden einer Statusnachricht und/oder einer Fehlermeldung über die Nahfeldkommunikationsverbindung (20) an den Zentralrechner (38) eingerichtet ist und/oder dass die Kommunikationseinrichtung (18) zum Empfangen von Steuerdaten und/oder Lastprofilen und/oder Zeitinformationen über die Nahfeldkommunikationsverbindung (20) von dem Zentralrechner (38) eingerichtet ist.

6. Applikationsprogramm für ein mobiles Kommunikationsgerät (22) mit zumindest
- einer Weitverkehrskommunikationseinrichtung,
- einem Prozessor, und
- einer Nahfeldkommunikationseinrichtung,
- umfassend Befehle zum Steuern des mobilen Kommunikationsgerät (22) derart, dass
- die Weitverkehrskommunikationseinrichtung eine Weitverkehrsverbindung mit einem räumlich entfernt angeordneten Zentralrechner (38) aufbaut,
- die Nahfeldkommunikationseinrichtung eine Nahfeldkommunikationsverbindung (20) mit einer Ladestation (2) für Elektrofahrzeuge aufbaut, und
- der Prozessor von der Nahfeldkommunikationseinrichtung empfangene, zumindest einen Energieverbrauch repräsentierenden Messwert umfassende Daten der Ladestation (2) zur Übermittlung an den Zentralrechner (38) an die Weitverkehrskommunikationseinrichtung weiterleitet,
**dadurch gekennzeichnet,**
- **dass** der Prozessor eine über die Weitverkehrskommunikationseinrichtung von dem Zentralrechner (38) empfangene Liste mit Ladestationskennungen verarbeitet, derart, dass die Nahfeldkommunikationseinrichtung bei einem detektierten Nahfeld einer Ladestation (2) eine Ladestationskennung aus dem Nahfeld extrahiert, dass der Prozessor die extrahierte Ladestationskennung mit von dem Zentralrechner (38) empfangenen Ladestationskennungen vergleicht und bei einem positiven Vergleichsergebnis unmittelbar eine Kopplung des Kommunikationsgerätes (22) mit der Ladestation (2) erfolgt.

7. Applikationsprogramm nach Anspruch 6 ferner umfassend Befehle zum Steuern des mobilen Kommunikationsgerätes (22) derart, dass die Weitverkehrskommunikationseinrichtung zunächst eine Verbindung mit dem Zentralrechner (38) aufbaut und/oder zumindest eine Nutzerkennung an den Zentralrechner (38) übermittelt.

8. Applikationsprogramm nach Anspruch 6 oder 7 ferner umfassend Befehle zum Steuern des mobilen Kommunikationsgerätes (22) derart, dass der Prozessor eine der Nutzerkennung zugeordnete Ladeberechtigung verarbeitet.

9. Applikationsprogramm nach einem der vorangehenden Ansprüche ferner umfassend Befehle zum Steuern des mobilen Kommunikationsgerätes (22) derart, dass bei einem positiven Vergleichsergebnis eine Ladeanforderung von der Nahfeldkommunikationseinrichtung über das Nahfeld an die Ladestation (2) übermittelt wird und/oder umfassend Befehle zum Steuern des mobilen Kommunikationsgerätes (22) derart, dass die Nahfeldkommunikationseinrichtung über das Nahfeld in Reaktion auf eine Ladeanforderung empfangene Daten verarbeitet, derart, dass die Weitverkehrskommunikationseinrichtung den in den Daten enthaltenen Messwert an den Zentralrechner (38) übermittelt.

10. Applikationsprogramm nach einem der vorangehenden Ansprüche ferner umfassend Befehle zum Steuern des mobilen Kommunikationsgerätes (22) derart, dass der Prozessor Daten umfassend zumindest den empfangenen Messwert, die extrahierte Ladestationskennung und/oder die Nutzerkennung zur Übermittlung an den Zentralrechner (38) an die Weitverkehrskommunikationseinrichtung übergibt.

11. Applikationsprogramm nach einem der vorangehenden Ansprüche ferner umfassend Befehle zum Steuern des mobilen Kommunikationsgerätes (22) derart, dass bei einem von dem Zentralrechner (38) über die Weitverkehrskommunikationseinrichtung empfangenen Ladefreigabesignal die Nahfeldkommunikationseinrichtung eine Ladefreigabe an die Ladestation (2) übermittelt.

12. Verfahren zum Betreiben einer Ladestation (2) für Elektrofahrzeuge umfassend:
- Aussenden von Daten umfassend zumindest einen Messwert einer einen Energieverbrauch messenden Messeinrichtung (8) der Ladestation (2) über ein Nahfeld,
- Empfangen der Daten im Nahfeld durch ein mobiles Kommunikationsgerät (22),
- Übermitteln der Daten von dem mobilen Kommunikationsgerät (22) an einen Zentralrechner (38) über ein Weitverkehrsnetz,
**dadurch gekennzeichnet,**
- **dass** das mobile Kommunikationsgerät (22) von einem Zentralrechner (38) eine Liste mit Kennungen von Ladestationen (2) empfängt und speichert, und
- zum Aufbau der Nahfeldkommunikationsverbindung (20) die Ladestation (2) eine Kennung in einem Nahfeld aussendet und
- **dass** das mobile Kommunikationsgerät (22) die Kennung aus dem Nahfeld extrahiert und durch einen Prozessor mit den vom Zentralrechner (38) empfangenen und gespeicherten Kennungen vergleicht, so dass bei einem positiven Vergleichsergebnis unmittelbar eine Kopplung mit der Ladestation (2) erfolgt.

13. Verfahren nach Anspruch 12, **dadurch gekennzeichnet, dass** zu Beginn eines Ladevorgangs eine Ladeanforderung von dem Kommunikationsgerät (22) über das Nahfeld an die Ladestation (2) übermittelt wird und/oder dass in Reaktion auf eine Ladeanforderung von der Ladestation (2) über das Nahfeld an das Kommunikationsgerät (22) zumindest einen Messwert repräsentierende Daten übermittelt werden.

14. Verfahren nach Anspruch 12 oder 13, **dadurch gekennzeichnet, dass** die zu Beginn des Ladevorgangs übermittelten Daten zumindest teilweise zunächst über das Weitverkehrsnetz von dem Kommunikationsgerät (22) an einen Zentralrechner (38) übermittelt werden, dass die übermittelten Daten in dem Zentralrechner (38) auf Plausibilität überprüft werden und dass bei einer positiven Prüfung zumindest ein Ladefreigabesignal und/oder ein Zeitsignal über das Weitverkehrsnetz von dem Zentralrechner (38) an das Kommunikationsgerät (22) übertragen werden.

15. Verfahren nach einem der vorangehenden Ansprüche, **dadurch gekennzeichnet, dass** zum Ende eines Ladevorgangs von dem Kommunikationsgerät (22) über das Nahfeld an die Ladestation (2) ein Ladeendsignal übermittelt wird und/oder dass die Ladestation (2) zum Ende eines Ladevorgangs über das Nahfeld an das Kommunikationsgerät (22) zumindest einen Messwert repräsentierende Daten und/oder eine Messgerätekennung übermittelt und dass die so übermittelten Daten zumindest teilweise von dem Kommunikationsgerät (22) über das Weitverkehrsnetz an den Zentralrechner (38) übermittelt werden.

## Claims

1. System comprising
- a charging station (2) for electric vehicles with
- a measuring means (8) which measures an energy consumption of a connected electric vehicle,
- a calculation means (16) which converts a measured value from the measuring means (8) into data, and
- a communication means (18) which transmits at least the data to a host computer (38), and with
- a mobile communication device (22), wherein
- the communication means (18) being configured to establish a near-field communication link (20) with the mobile communication device (22) such that
- it is possible to establish a wide-area-network connection, suitable for transmitting the data to the host computer (38) via the near-field communication link (20) with the communication device (22),
**characterised in that**
- the mobile communication device (22) receives and stores from a host computer (38) a list with identifiers of charging stations (2), and
- the charging station (2) emits an identifier in a near field to establish the near-field communication link (20) and
- the communication device (22) extracts the identifier from the near field and, using a processor, compares it with the identifiers which have been received and stored from the host computer (38), so that if the result of the comparison is positive, coupling to the charging station (2) takes place immediately.

2. System according to claim 1, **characterised in that** the communication means (18) is configured to receive user data via the near-field communication link (20).

3. System according to any one of the preceding claims, **characterised in that** the communication means (18) establishes a near field within the centimetre range and/or **in that** the communication means (18) sends out a near-field connection set-up message and/or monitors the receipt of a near-field connection set-up message and/or **in that** the communication means (18) is configured to receive a charging enabling signal via the near-field communication link (20) and **in that** the communication means (18) transmits the charging enabling signal to a charging control circuit in the charging station (2).

4. System according to any one of the preceding claims, **characterised in that** the charging enabling signal contains information about a charging duration, a charging period, a charging start time, a charging end time and/or a charging energy.

5. System according to any one of the preceding claims, **characterised in that** the communication means (18) is configured to send a status message and/or an error message via the near-field communication link (20) to the host computer (38) and/or in that the communication means (18) is configured to receive control data and/or load profiles and/or time information from the host computer (38) via the near-field communication link (20).

6. Application program for a mobile communication device (22) with at least
- a wide-area-network communication means,
- a processor, and
- a near-field communication means,
- comprising commands to control the mobile communication device (22) such that
- the wide-area-network communication means establishes a wide-area-network connection with a spatially removed host computer (38),
- the near-field communication means establishes a near-field communication connection (20) with a charging station (2) for electric vehicles, and
- the processor forwards to the wide-area-network communication means for transmission to the host computer (38) data of the charging station (2), which data has been received by the near-field communication means and comprises at least one measured value representing energy consumption
**characterised in that**
- the processor processes a list with charging station identifiers which has been received from the host computer (38) via the wide-area-network communication means such that when a near field of a charging station (2) has been detected, the near-field communication means extracts a charging station identifier from the near field, the processor compares the extracted charging station identifier with charging station identifiers received from the host computer (38) and if there is a positive comparison result, the communication device (22) is immediately coupled to the charging station (2).

7. Application program according to claim 6, further comprising commands for controlling the mobile communication device (22) such that the wide-area-network communication means initially establishes a connection to the host computer (38) and/or transmits at least one user identifier to the host computer (38).

8. Application program according to claim 6 or claim 7, further comprising commands for controlling the mobile communication device (22) such that the processor processes a charging authorisation associated with the user identifier.

9. Application program according to any one of the preceding claims, further comprising commands for controlling the mobile communication device (22) such that when there is a positive comparison result, a charging request is transmitted from the near-field communication means via the near field to the charging station (2) and/or comprising commands for controlling the mobile communication device (22) such that the near-field communication means processes data received via the near field in response to a charging request such that the wide-area-network communications means transmits the measured value contained in the data to the host computer (38).

10. Application program according to any one of the preceding claims, further comprising commands for controlling the mobile communication device (22) such that the processor transmits to the wide-area-network communications means data comprising at least the received measured value, the extracted charging station identifier and/or the user identifier for transmission to the host computer (38).

11. Application program according to any one of the preceding claims, further comprising commands for controlling the mobile communication device (22) such that when a charging enabling signal is received from the host computer (38) via the wide-area-network communication means, the near-field communication means transmits a charging clearance to the charging station (2).

12. Method for operating a charging station (2) for electric vehicles comprising:
- emission of data comprising at least one measured value of a measuring means (8), measuring an energy consumption, of the charging station (2) via a near field,
- receipt of the data in the near field by a mobile communication device (22),
- transmission of the data from the mobile communication device (22) to a host computer (38) via a wide area network,
**characterised in that**
- the mobile communication device (22) receives and stores from a host computer (38) a list with identifiers of charging stations (2), and
- the charging station (2) emits an identifier in a near field to establish the near field communication link (20), and
- the communication device (22) extracts the identifier from the near field and, using a processor, compares it with the identifiers which have been received and stored from the host computer (38), so that if the result of the comparison is positive, coupling to the charging station (2) takes place immediately.

13. Method according to claim 12, **characterised in that** at the start of a charging procedure, a charging request is transmitted from the communication device (22) via the near field to the charging station (2) and/or **in that** data representing at least one measured value is transmitted from the charging station (2) to the communication device (22) via the near field in response to a charging request.

14. Method according to claim 12 or claim 13, **characterised in that** the data transmitted at the start of the charging procedure is at least partly initially transmitted to a host computer (38) via the wide area network from the communication device (22), **in that** the transmitted data is checked for plausibility in the host computer (38) and **in that** if the check proves positive, at least one charging enabling signal and/or a time signal are transmitted to the communication device (22) from the host computer (38) via the wide area network.

15. Method according to any one of the preceding claims, **characterised in that** at the end of a charging procedure, a charging end signal is transmitted to the charging station (2) from the communication device (22) via the near field and/or **in that** at the end of a charging procedure, the charging station (2) transmits to the communication device (22) via the near field data representing at least one measured value and/or a measuring device identifier and **in that** the data transmitted thus is at least partly transmitted to the host computer (38) from the communication device (22) via the wide area network.

## Revendications

1. Système avec
- un poste de charge (2) pour véhicules électriques, qui comprend
- un dispositif de mesure (8) qui mesure une consommation d'énergie d'un véhicule électrique branché,
- un dispositif de calcul (16), qui convertit en données une valeur mesurée par le dispositif de mesure (8), et
- un dispositif de communication (18), qui, au moins, transmet les données à un ordinateur central (38), et
- un appareil de communication mobile (22),
sachant q u e
- le dispositif de communication (18) est aménagé pour l'établissement d'une liaison de communication en champ proche (20) avec l'appareil de communication mobile (22), de telle manière q u e
- par l'intermédiaire de la liaison de communication en champ proche (20) avec l'appareil de communication (22), une liaison par réseau étendu, appropriée à la transmission des données, est établie avec l'ordinateur central (38),
**caractérisé en ce que**
- l'appareil de communication mobile (22) reçoit d'un ordinateur central (38), une liste d'identifications de postes de charge (2) et la mémorise, et que
- le poste de charge (2) envoie une identification en champ proche pour l'établissement de la liaison de communication en champ proche (20) et q u e , l'appareil de communication mobile (22) extrait du champ proche l'identification, qui est comparée, par un processeur, avec les identifications reçues et mémorisées par l'ordinateur central (38), de sorte que, lors d'un résultat positif de la comparaison, un couplage avec le poste de charge (2) soit directement effectué.

2. Système selon la revendication 1,
**caractérisé en ce que** le dispositif de communication (18) est aménagé pour la réception de données d'utilisateur, par l'intermédiaire de la liaison de communication en champ proche (20).

3. Système selon l'une des revendications précédentes,
**caractérisé en ce que** le dispositif de communication (18) établit un champ proche dans une gamme centimétrique et / ou q u e le dispositif de communication (18) envoie un message d'établissement d'une liaison en champ proche et / ou contrôle la réception d'un message d'établissement de liaison en champ proche et / ou que le dispositif de communication (18) est aménagé pour la réception d'un signal de libération de charge par l'intermédiaire de la liaison de communication en champ proche (20), et que le dispositif de communication (18) transmet le signal de libération de charge à un circuit de commande de charge du poste de charge (2).

4. Système selon l'une des revendications précédentes,
**caractérisé en ce que** le signal de libération de charge contient des informations relatives à une durée de charge, un laps de temps de charge, un moment de début de charge, un moment de fin de charge et / ou une énergie de charge.

5. Système selon l'une des revendications précédentes,
**caractérisé en ce que** le dispositif de communication (18) est aménagé pour envoyer à l'ordinateur central (38) un message d'état et / ou un avis d'erreur par l'intermédiaire d'une liaison de communication en champ proche (20), et / ou q u e le dispositif de communication (18) est aménagé pour recevoir, de l'ordinateur central (38), des données de commande et / ou des profils de charge et / ou des informations de temps, par l'intermédiaire de la liaison de communication en champ proche (20).

6. Programme d'application pour un appareil de communication mobile (22) avec au moins
- une installation de communication par réseau étendu,
- un processeur, et
- une installation de communication en champ proche,
- comprenant des ordres pour la commande de l'appareil de communication mobile (22) de telle manière que
- l'installation de communication par réseau étendu établisse une liaison par réseau étendu avec l'ordinateur central (38) éloigné spatialement,
- l'installation de communication en champ proche établisse une liaison de communication en champ proche (20) avec un poste de charge (2) pour véhicules électriques, et q u e
- le processeur transmette, à l'installation de communication en réseau étendu, des données du poste de charge (2), qui, devant être transmises à l'ordinateur central (38), ont été reçues par l'installation de communication en champ proche et contiennent une valeur de mesure, qui représente au moins une consommation d'énergie,
**caractérisé en ce que**
- le processeur traite une liste d'identifications de postes de charge, reçue par l'ordinateur central (38) par l'intermédiaire de l'installation de communication par réseau étendu, de sorte que, lors de la détection d'un champ proche d'un poste de charge (2), l'installation de communication par réseau étendu extraie du champ proche une identification de poste de charge, q u e le processeur compare l'identification de poste de charge extraite avec des identifications de postes de charge reçues par l'ordinateur central (38) et q u e, lors d'un résultat positif de la comparaison, un couplage de l'appareil de communication mobile (22) avec le poste de charge (2) s'effectue directement.

7. Programme d'application selon la revendication 6, qui, de plus, comprend des ordres de commande de l'appareil de communication mobile (22) de sorte que l'installation de communication par réseau étendu établisse d'abord une liaison avec l'ordinateur central (38) et / ou transmette au moins une identification d'utilisateur à l'ordinateur central (38).

8. Programme d'application selon revendication 6 ou 7, qui, de plus, comprend des ordres de commande de l'appareil de communication mobile (22) de sorte que le processeur traite une autorisation de charge associée à l'identification d'utilisateur.

9. Programme d'application selon l'une des revendications précédentes, qui, de plus, comprend des ordres de commande de l'appareil de communication mobile (22) de sorte que, lors d'un résultat positif de la comparaison, une demande de charge est transmise de l'installation de communication en champ proche au poste de charge (2) par l'intermédiaire du champ proche, et / ou qui comprend des ordres de commande de l'appareil de communication mobile (22) de sorte que l'installation de communication en champ proche traite, par l'intermédiaire du champ proche, des données en réaction à une demande de charge, de telle manière que l'installation de communication par réseau étendu transmette à l'ordinateur central (38) la valeur de mesure contenue dans les données.

10. Programme d'application selon l'une des revendications précédentes, qui, de plus, comprend des ordres de commande de l'appareil de communication mobile (22) de sorte que le processeur délivre à l'installation de communication par réseau étendu des données contenant au moins la valeur de mesure reçue, l'indentification de poste de charge extraite et / ou l'identification d'utilisateur aux fins de transmission à l'ordinateur central (38).

11. Programme d'application selon l'une des revendications précédentes, qui, de plus, comprend des ordres de commande de l'appareil de communication mobile (22) de sorte que, lorsque que l'ordinateur central (38) reçoit un signal de libération de charge par l'intermédiaire de l'installation de communication par réseau étendu, l'installation de communication en champ proche transmette une libération de charge au poste de charge (2).

12. Procédé de fonctionnement d'un poste de charge (2) pour véhicules électriques comprenant
- L'émission, par l'intermédiaire d'un champ proche, de données comprenant au moins une valeur de mesure en provenance d'un dispositif de mesure (8) du poste de charge (2), qui mesure une consommation d'énergie,
- la réception de données en champ proche par un appareil de communication mobile (22),
- la transmission des données de l'appareil de communication mobile (22) à un ordinateur central (38) par l'intermédiaire d'un réseau étendu,
**caractérisé en ce que**
- l'appareil de communication mobile (22) reçoit d'un ordinateur central (38) une liste d'identifications de postes de charge (2) et la mémorise, et
- le poste de charge (2) envoie une identification dans un champ proche pour l'établissement de la liaison de communication en champ proche (20), et
- l'appareil de communication mobile (22) extrait du champ proche l'identification, qui est comparée, par un processeur, avec les identifications reçues et mémorisées par l'ordinateur central (38), de sorte que, lors d'un résultat positif de la comparaison, un couplage avec le poste de charge (2) soit directement effectué.

13. Procédé selon la revendication 12,
**caractérisé en ce que**, au début d'un processus de charge, une demande de charge est transmise de l'appareil de communication (22) au poste de charge (2), par l'intermédiaire du champ proche, et / ou que, en réaction à une demande de charge du poste de charge (2), des données, représentant au moins une valeur de mesure, sont transmises à l'appareil de communication mobile (22) par l'intermédiaire du champ proche.

14. Procédé selon revendication 12 ou 13,
**caractérisé en ce que** les données, transmises au début du processus de charge, sont d'abord transmises, au moins partiellement, de l'appareil de communication (22) à un ordinateur central (38), par l'intermédiaire du réseau étendu, q u e les données transmises sont contrôlées, quant à la plausibilité, dans ledit ordinateur central (38) et
q u e, lors d'un résultat positif du contrôle, au moins un signal de libération de charge et / ou un signal de temps est transmis de l'ordinateur central (38) à l'appareil de communication mobile (22) par l'intermédiaire du réseau étendu.

15. Procédé selon l'une des revendications précédentes,
**caractérisé en ce que**, à la fin d'un processus de charge, un signal de fin de charge est transmis en champ proche, de l'appareil de communication (22) au poste de charge (2), par l'intermédiaire du champ proche, et / ou q u e le poste de charge (2), à la fin d'un processus de charge, transmet à l'appareil de communication mobile (22), par l'intermédiaire du champ proche, des données représentant au moins une valeur de mesure et / ou une identification d'appareil de mesure et q u e les données, ainsi transmises, sont transmises, au moins partiellement, de l'appareil de communication (22) à l'ordinateur central (38) par l'intermédiaire du réseau étendu.
